# EUROPÄISCHE PATENTSCHRIFT

(11) **EP 2 656 450 B1**
(45) Veröffentlichungstag und Bekanntmachung des Hinweises auf die Patenterteilung: **05.11.2014**
(21) Anmeldenummer: 11802263.1
(22) Anmeldetag: 03.08.2011
(51) Int. Cl.: H01R 13/627, H01R 13/633, G02B 6/42

(54) **STECKVERBINDER**
PLUG CONNECTOR
CONNECTEUR

(30) Priorität: 21.12.2010 DE 102010055434
(43) Veröffentlichungstag der Anmeldung: 30.10.2013
(73) Patentinhaber: HARTING Electronics GmbH, 32339 Espelkamp (DE)
(72) Erfinder: LINDKAMP, Marc, 32312 Lübbecke (DE)
(86) Internationale Anmeldenummer: PCT/DE2011/075185
(87) Internationale Veröffentlichungsnummer: WO 2012/083936

(56) Entgegenhaltungen:
- US-A1- 2006 043 089
- US-A1- 2009 227 133
- US-A1- 2009 244 856
- US-B1- 6 855 558

## Beschreibung

Die Erfindung betrifft einen Steckverbinder zum Anschluss elektrischer Leiter, gebildet aus einem Gehäuse, mit einer mittels einer Leiterplatte gebildeten Steckseite und einer Kabelanschlussseite und versehen mit Rastmitteln, zur Verrastung mit einem Gegenstecker.

Ein derartiger Steckverbinder wird benötigt, um eine lösbare Verbindung zwischen den Adern eines Kabel mit in einem Gegenstecker befindlichen Kontakten herzustellen. Dabei ist sicherzustellen, dass sowohl die elektrische und mechanische Kontaktierung zwischen dem Steckverbinder und dem Gegenstecker gewährleistet wird und eine einfaches Lösen der Verbindung möglich ist.

### Stand der Technik

Aus der US 7,297,028 B2 ist ein Kabelverbinder zum Einsetzen in ein Einschub bekannt, wobei der Kabelverbinder über einen Vorsprung verfügt mittels welchem der Kabelverbinder im Einschub verrastet. An der Außenseite des Kabelverbinders ist ein Entriegelungshebel angebrachten, der durch Betätigung einen Teil des Einschubs elastisch verformt, wodurch der Kabelverbinder entriegelt wird.

Des weiteren beschreibt US 7,690,939 B2, welche als nächstliegender Stand der Technik angesehen wird, ein elektronisches Modul das ein Gehäuse mit einen Rastmechanismus aufweist, wobei der Rastmechanismus aus einem Schiebeelement und einem Hebel besteht. Das Modul wird in einen Käfig eingesetzt und mittels einer Rastnase in einem Federelement des Käfigs verrastet. Durch Betätigung des Hebels wird das Schiebeelement axial verschoben und dadurch das Federelement des Käfigs angehoben und so die Verriegelung des Moduls gelöst.

Nachteilig wirkt sich am Stand der Technik aus, dass die mechanischen Elemente der Vorrichtungen an den Außenseiten der Module oder Stecker angebracht sind. Das Wirken von äußeren Einflüssen wie Staub oder Schmutz kann dazu führen, dass das mechanische Zusammenspiel dieser Elemente nicht mehr gewährleistet werden kann. Ein Ausfall des Entriegelungsmechanismus kann die Folge sein, wodurch das Modul oder der Stecker nicht entriegelt und entfernt werden kann.

### Aufgabenstellung

Der Erfindung liegt daher die Aufgabe zugrunde, einen Steckverbinder so auszubilden, dass nach einer Zwangsverriegelung mit einem Gegenstecker eine Entriegelung des Steckerverbinders durch einfache Handhabung gewährleistet wird. Ferner soll eine einfache Montage von Entriegelungsmechanismus und Steckverbinder durch wenig Bauteile möglich sein.

Diese Aufgabe wird gemäß Anspruch 1 dadurch gelöst, dass das Gehäuse einstückig ausgebildet ist und im Inneren einen Entriegelungsmechanismus enthält, der mittels einer Lasche auslösbar ist, dass der Entriegelungsmechanismus vom Inneren des Gehäuses aus auf das außenliegende Rastmittel wirkt, und dass der Entriegelungsmechanismus ein entlang der Steckverbinderlängsachse verschiebbares Gleitelement aufweist, sowie ein Entriegelungselement, das senkrecht zur Steckverbinderlängsachse verschiebbar ist, wobei das Gleitelement und das Entriegelungselement beweglich miteinander verbunden sind und so zusammenwirken, dass die Bewegung des Gleitelements entlang der Steckverbinderlängsachse eine Bewegung des Entriegelungselements senkrecht zur Steckverbinderlängsachse bewirkt, und wobei durch Ziehen der an der Kabelanschlussseite befindlichen Lasche entgegen der Steckrichtung des Steckverbinders der Entriegelungsmechanismus das Rastmittel in das Gehäuse zieht und dadurch die Verrastung zum Gegenstecker löst.

Vorteilhafte Ausgestaltungen der Erfindung sind in den Unteransprüchen angegeben.

Bei der Erfindung handelt es sich um einen Steckverbinder, der durch ein Gehäuse gebildet wird, das eine Steckseite und eine gegenüberliegende Kabelanschlussseite aufweist. Die Steckseite des Gehäuses wird durch eine Leiterplatte gebildet, welche die Kontakte des Steckverbinders darstellt. Bei einer Verbindung des Steckverbinders mit einem Gegenstecker kontaktiert die Leiterplatte mit den im Gegenstecker befindlichen Kontakten und stellen so eine elektrische Verbindung zwischen Steckverbinder und Gegenstecker her. An der Kabelanschlussseite des Gehäuses führt ein anzuschließendes Kabel in das Gehäuse des Steckverbinders. Die Adern des angeschlossenen Kabels werden im Gehäuse vereinzelt und sind mit der Leiterplatte elektrisch leitend verbunden. An der Außenfläche des Gehäuses sind Rastmittel angebracht, die eine mechanische Verrastung des Steckverbinders mit einem Gegenstecker gewährleisten. Das steckseitig flach ausgeführte Rastmittel verrastet beim Verbinden des Steckverbinders mit dem Gegenstecker in einer Aussparung, die sich in einem Federelement des Gegensteckers befindet.

Die mit der Erfindung erzielten Vorteile bestehen insbesondere darin, dass das Gehäuse des Steckverbinders als einteiliges Bauteil ausgebildet ist. Weiterhin ist von besonderem Vorteil, dass der Entriegelungsmechanismus, der ein Trennen des Steckverbinders von einem Gegenstecker ermöglicht, im Inneren des Gehäuses untergebracht ist. Eine Lasche, die mit dem Entriegelungsmechanismus verbunden ist und aus dem Gehäuse führt, ist zur Entriegelung des Mechanismus vorgesehen.

Erfindungsgemäß wirk der im Inneren des Gehäuses liegende Entriegelungsmechanismus auf das an der Außenfläche des Gehäuses liegende Rastmittel. Durch eine Bewegung der Lasche, die sich an der Kabelanschlussseite des Gehäuses befindet, entgegen der Steckrichtung des Steckverbinders wird das Rastmittel von seiner Position auf der Außenfläche in das Gehäuse verlagert. Die Verrastung mit dem Federelement des Gegensteckers wird so gelöst und ein Trennen des Steckverbinders vom Gegenstecker ist möglich.

In einer zweckmäßigen Ausbildungsform wird der Entriegelungsmechanismus im Inneren des Steckverbinders durch zwei Elemente gebildet. Ein erstes Element ist entlang der Steckverbinderlängsachse über einen bestimmten Weg verschiebbar gelagert. Das zweite Element des Entriegelungsmechanismus ist senkrecht zur Steckverbinderlängsachse über einen bestimmten Weg verschiebbar gelagert. Vorzugsweise ist an dem zweitem, U-förmig in die Außenfläche des Gehäuse integrierten Element das Rastmittel zur Verrastung mit dem Gegenstecker angebracht. Durch eine bewegliche Verbindung des ersten Elements mit dem zweiten Element wird durch die Bewegung des ersten Elements entlang der Steckverbinderlängsachse eine Bewegung des zweiten Elements senkrecht zur Steckverbinderlängsachse, in das Gehäuse bewirkt.

Eine vorteilhafte Ausbildungsform des Entriegelungsmechanismus sieht vor, dass das erste Element Führungsnuten aufweist in welchen Führungsnasen, die an dem zweiten Element angebracht sind, geführt werden. Die Führungsnuten des ersten Elements sind so schräg zur Steckverbinderlängsachse angeordnet, dass sie sich von der Kabelanschlussseite zur Steckseite laufend von dem zweiten Element entfernen.

In einer weiteren bevorzugten Ausbildungsform ist die Lasche zur Betätigung des Entriegelungsmechanismus an der Kabelanschlussseite des Steckverbinders an das erste Element des Entriegelungsmechanismus angebracht. Die Lasche, welche sich längs des angeschlossenen Kabels erstreckt kann wahlweise über oder unter dem Kabel angebracht werden. Dafür ist eine Montage der Lasche um 180° gedreht entlang ihrer Längsachse vorgesehen.

Um eine Verrastung des Steckverbinders mit einem Gegenstecker zu gewährleisten, sieht eine zweckmäßige Ausbildungsform vor, dass eine Feder im Inneren des Gehäuses auf den Entriegelungsmechanismus wirkt. Die Feder, die vorzugsweise auf das erste Element wirkt, bewirkt eine Zwangsverriegelung des Entriegelungsmechanismus.

Weitere Ausgestaltungen der Erfindung sind in den Unteransprüchen beschrieben.

### Ausführungsbeispiel

Ein Ausführungsbeispiel der Erfindung ist in der Zeichnung dargestellt und wird im Folgenden näher erläutert. Es zeigen:
- Fig. 1a: einen Steckverbinder in räumlicher Ansicht;
- Fig. 1b: einen Steckverbinder mit gedreht angebrachter Lasche in räumlicher Ansicht;
- Fig. 2: einen Steckverbinder in einem Gegenstecker gesteckt in räumlicher Ansicht;
- Fig. 3: einen Steckverbinders ohne Gehäuse in räumlicher Ansicht;
- Fig. 4: ein einzelnes Trägerelement in räumlicher Ansicht;
- Fig. 5: ein einzelnes Gleitelement des Entriegelungsmechanismus in räumlicher Ansicht;
- Fig. 6: einen Steckverbinder in räumlicher Explosionsansicht;
- Fig. 7a: eine Detailansicht des unbetätigten Entriegelungsmechanismus;
- Fig. 7b: eine Detailansicht des betätigten Entriegelungsmechanismus;
- Fig. 8a: eine weitere Ausführungsform des unbetätigten Entriegelungsmechanismus in einer Detailansicht; und
- Fig. 8b: eine weitere Ausführungsform des betätigten Entriegelungsmechanismus in einer Detailansicht.

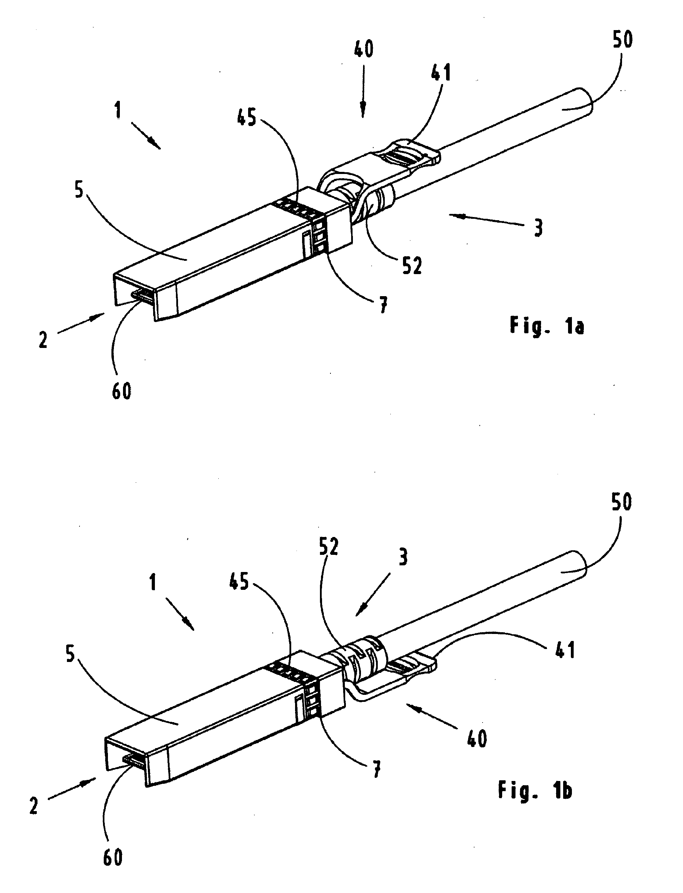

Fig.1a zeigt einen, in räumlicher Ansicht dargestellten Steckverbinder 1 mit einer Steckseite 2 und einer Kabelanschlussseite 3. Der Steckverbinder 1 besteht aus einem Gehäuse 5 in dem sich an der Steckseite 2 eine Leiterplatte 60 befindet, über welche eine Kontaktierung des Steckverbinders 1 mit einem Gegenstecker 70 möglich ist. An der Kabelanschlussseite 3 des Steckverbinders 1 führt ein anzuschließendes Kabel 50 in den Steckverbinder 1. In dieser Ausführungsform ist zum Schutz des Kabels 50 eine Knickschutz 52 an der Kabelanschlussseite 3 angebracht. Kabelanschlussseitig führt eine Lasche 40, die zur Auslösung eines Entriegelungsmechanismus dient, in das Gehäuse 5. Ein Griffende 41 der Lasche 40 befindet sich dabei oberhalb des angeschlossenen Kabels 50. An dem Gehäuse 5 ist zudem eine Masseband 45 in einer Nut 7 angebracht, mittels welchem eine Massekontaktierung des Steckverbinders 1 zu dem Gegenstecker 70 ermöglicht wird.

Die Fig. 1b zeigt den Steckverbinder 1 wie in Fig. 1 a dargestellt, wobei in dieser Ausführungsform die Lasche 40 zur Betätigung des Entriegelungsmechanismus um 180° entlang ihrer Längsachse gedreht in das Gehäuse 5 führt. Dadurch befindet sich das Griffende 41 der Lasche 40 unterhalb des angeschlossenen Kabels 50.

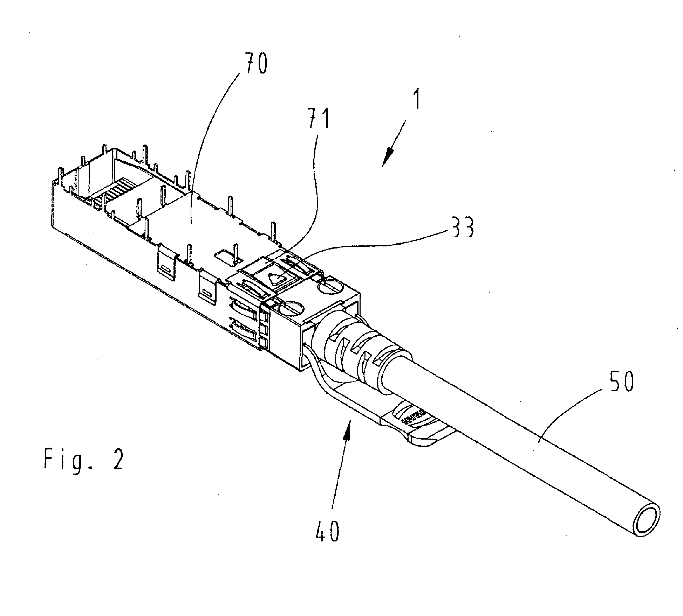

In der Fig 2 ist der Steckverbinder 1 verbunden mit einem Gegenstecker 70 dargestellt. Der Steckverbinder 1 weist ein Rastmittel 33 auf, das mit einem Federelement 71 im Gegenstecker 70 verrastet ist, wobei das Federelement 71 innerhalb des Gegensteckers 70 angeordnet ist.

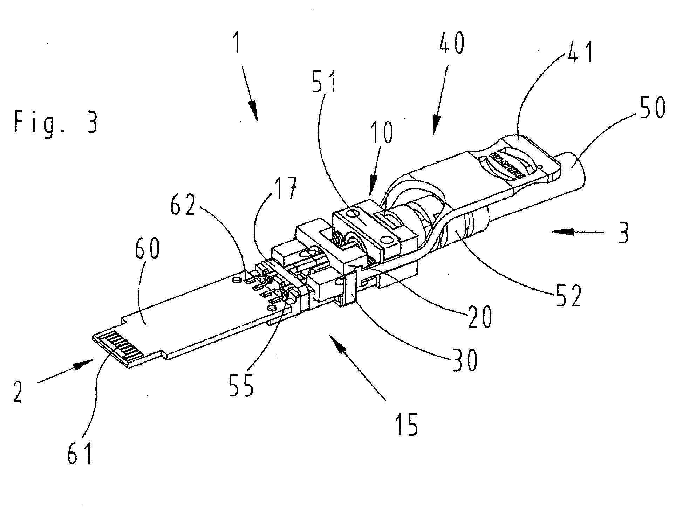

Fig. 3 zeigt den Steckverbinder 1 in räumlicher Ansicht, ohne das Gehäuse 5. Auf der Leiterplatte 60, welche die Steckseite 2 des Steckverbinders 1 bildet sind Steckerkontakte 61 zur elektrischen Kontaktierung mit dem Gegenstecker 70 vorgesehen. Auf der gegenüberliegenden Seite ist die Leiterplatte 60 an einem Trägerelement 10 befestigt und weist Kabelanschlusskontakte 62 auf, an welchen Adern 55 des angeschlossenen Kabels 50 kontaktieren. Die Adern 55 des Kabels 50 sind in einer Kabelvereinzelung 15 paarweise mittels eines Klemmbügels 17 gehalten. An der Kabelanschlussseite 3 weist das Trägerelement 10 eine Zugentlastung 51 und ein Knickschutz 52 für das angeschlossene Kabel 50 auf.

Das Trägerelement 10 sorgt ferner dafür, dass die Leiterplatte 60, die Adern 55 und das Kabel 50 zueinander fixierbar sind. Ein Verschieben der Leiterplatte 60, der Adern 55 und des Kabels 50 zueinander ist nicht möglich und es kann eine einfache Montage und Befestigung der Adern 55 auf den Kabelanschlusskontakten 62 der Leiterplatte 60 vorgenommen werden.

Der in Fig. 3 dargestellte Entriegelungsmechanismus, welcher im mittleren Bereich des Trägerelements 10 angeordnet ist, wird aus zwei Teilen gebildet: einem Gleitelement 20 und einem Entriegelungselement 30. In Richtung der Kabelanschlusseite 3 ist am Gleitelement 20 erfindungsgemäß die Lasche 40 zur Betätigung des Entriegelungsmechanismus vorgesehen. Die Lasche 40 ist in dieser Ausführungsform so montiert, dass das Griffende 41 der Lasche 40 sich oberhalb des angeschlossenen Kabels 50 befindet.

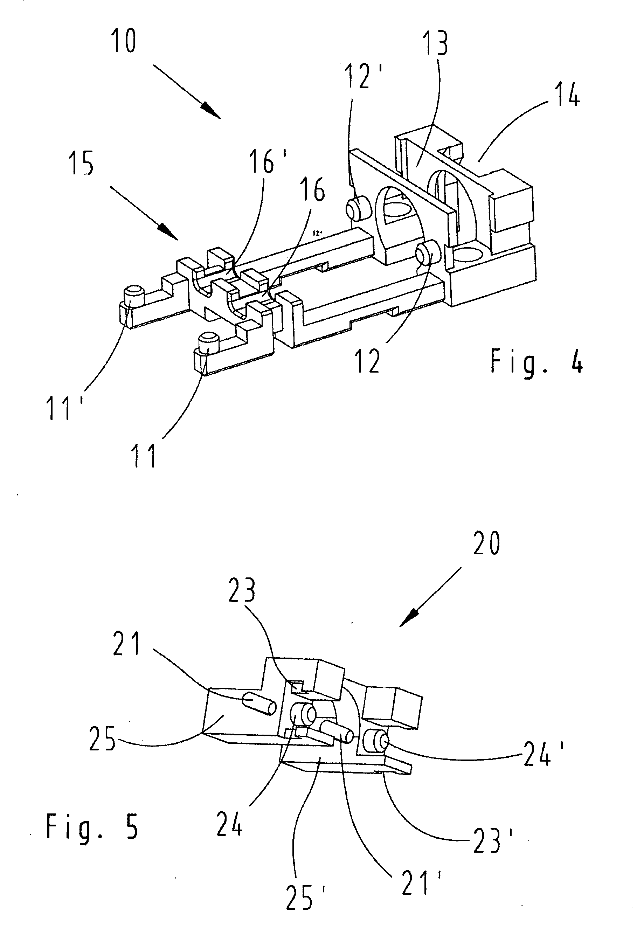

In Fig. 4 ist ein Trägerelement 10 in einer räumlichen Ansicht dargestellt. Im vorderen, steckseitigen Bereich des Trägerelements 10 sind Befestigungen für die Leiterplatte 60 vorgesehen, welche in dieser Ausführungsform aus zwei Zapfen 11, 11' besteht, die von zwei Bohrungen 63, 63' in der Leiterplatte 6 aufgenommen werden. In Kabelanschlussrichtung ist hinter den Zapfen 11, 11' eine Kabelvereinzelung 15 auf dem Trägerelement 10 angeordnet, die aus hier zwei, sich in Steckerlängsrichtung erstreckenden Ausnehmungen 16, 16' besteht. Jede der Ausnehmungen 16, 16' ist zur Aufnahme einer der Doppeladern 55 des Kabels 50 vorgesehen.

Der mittleren Bereich des Trägerelements 10 ist vorgesehen, um das Gleitelement 20 und das Entrastungselement 30 des Entriegelungsmechanismus aufzunehmen.

Am hinteren, kabelanschlussseitigen Bereich des Trägerelements 10 sind in axialer Ausrichtung zwei Federaufnahmen 12, 12' vorgesehen. Das Ende des Trägerelements 10 wird aus einer Zugentlastungsaufnahme 13 und einer Knickschutzaufnahme 14 zur Befestigung der Zugentlastung 51 bzw. des Knickschutzes 52 gebildet.

Fig. 5 zeigt ein Gleitelement 20 in einer räumlichen Ansicht aus Richtung der Kabelanschlussseite 3. Das Gleitelement 20 ist als U-förmig extrudiertes Teil aus zwei Schenkeln 25, 25' ausgebildet, wobei zwischen den zwei Schenkeln 25, 25' das angeschlossene Kabel 50 hindurchgeführt wird. Erfindungsgemäß weist das Gleitelement 20 zwei, zur Steckerlängsachse schräg angeordnete Führungsnut 21, 21' auf. Die Führungsnuten 21, 21' sind in dieser Ausführungsform als Langlöcher in den Schenkeln 25, 25' des Gleitelements 20 ausgebildet. In den Führungsnuten 21, 21' sind im montierten Zustand Führungsnasen 32, 32' des Entrastungselements 30 angeordnet.

Das Gleitelement 20 weist kabelanschlussseitig zudem zweckmäßig zwei T-förmige Ausnehmungen 23, 23' an den Außenseiten der beiden Schenkeln 25, 25' auf. Diese sind zur Befestigung der Lasche 40 vorgesehen. Zudem ist kabelanschlussseitig an jedem der Schenkel 25, 25' eine stiftförmige Federaufnahme 24, 24' vorgesehen.

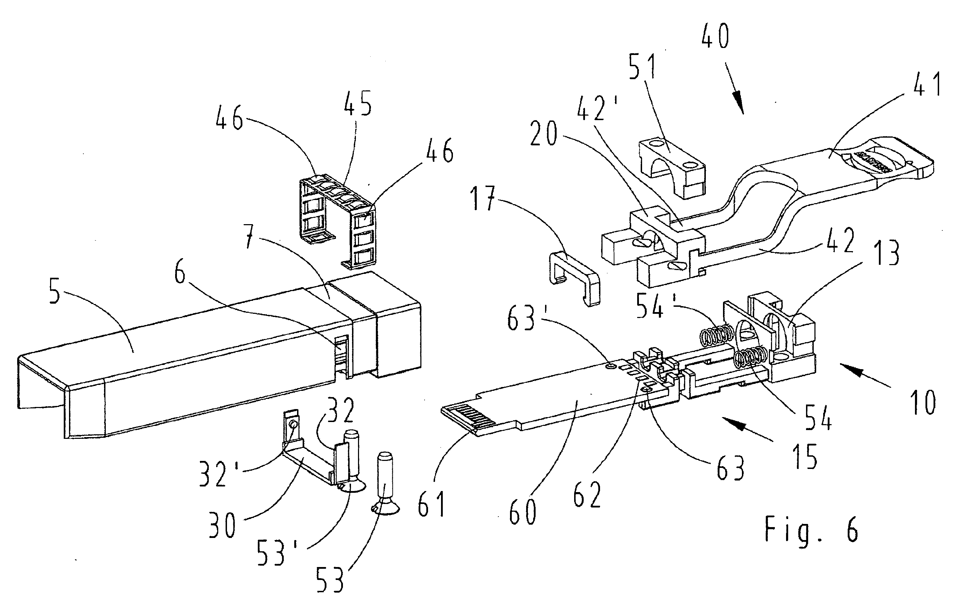

Eine räumliche Explosionsansicht des Steckverbinders 1 ist in Fig. 6 dargestellt. Am Gehäuse 5 ist die Nut 7 zu erkennen, welche im montierten Zustand das Masseband 45 aufnimmt. Das Masseband 45 weist gegen die Steckrichtung zeigende, dreiseitig freigestellte, tonnenförmig nach außen gebogene Kontaktfinger 46 auf, mittels welcher eine elektrische Kontaktierung des Massepotenzials des Steckverbinders 1 zum Gegenstecker 70 möglich ist.

Für die Entmontage des Trägerelements 10 mit den daran befindlichen Elementen im Gehäuse 5 sind in dieser Ausführungsform zwei Schrauben 53, 53' vorgesehen, mit denen das Trägerelement 10 im Gehäuse 5 fixiert wird.

Auf der Leiterplatte 60 sind steckseitig Steckerkontakte 61 zur Kontaktierung in einem Gegenstecker 70 zu erkennen. Auf der Kabelanschlussseite der Leiterplatte 60 befinden sich Kabelanschlusskontakte 62 zum Anschluss von einzelnen Adern 55 des anzuschließenden Kabels 50. Zudem sind in der Leiterplatte 60 zwei Bohrungen 63, 63' angebracht um die Leiterplatte 60 mit dem Trägerelement 10 zu verbinden. Zum problemlosen Anschluss der Adern 55 an der Leiterplatte 60 ist die Kabelvereinzelung 15 direkt hinter den Kabelanschlusskontakten 62 auf dem Trägerelement 10 angeordnet. Die Kabelvereinzelung 15 besteht aus hier zwei, sich in Steckerlängsrichtung erstreckenden Ausnehmungen 16, 16', welche jeweils eine Doppelader 55 des anzuschließenden Kabels 50 aufnimmt. Die in die Ausnehmungen 16, 16' eingelegten Adern 55 werden mittels des Klemmbügels 17 in der Kabelvereinzelung 15 verklemmt.

Des Weiteren zeigt Fig. 6 die Lasche 40, welche aus einem Griffende 41 und zwei Befestigungsenden 42, 42' gebildet wird. Die hier T-förmig ausgebildeten Befestigungsenden 42, 42' greifen dabei von der Kabelanschlussseite 3 aus in die entsprechend T-förmig ausgebildeten Ausnehmungen 23, 23' im Gleitelement 20 des Entriegelungsmechanismus.

Erkennbar sind die zwei seitlichen Führungsnuten 21, 21' des Gleitelements 20, die zur Steckverbinderlängsachse geneigt sind. Die Führungsnuten 21, 21' liegen am hinteren, kabelanschlussseitigen Ende nahe am Entriegelungselement 30 und verlaufen nach vorne, zum steckseitigen Ende hin vom Entriegelungselement 30 weg. In die beiden Führungsnuten 21, 21' greifen Führungsnasen 32, 32' des Entriegelungselements 30 seitlich ein. Die Führungsnasen 32, 32' verbinden das Gleitelement 20 beweglich mit dem Entriegelungselement 30.

Aus einer linearen Bewegung des Gleitelements 20 entlang der Steckverbinderachse entsteht so eine lineare Bewegung des Entriegelungselements 30 senkrecht zur Steckverbinderachse. Das Entriegelungselement 30 wird dabei in einer dafür vorgesehenen Öffnung 6 im Gehäuse 5 linear geführt. Zweckmäßig ist die Öffnung 6 als ein über drei Seiten ausgeformter Schlitz im Gehäuse 5 ausgebildet.

Um eine Zwangsverriegelung beim Stecken des Steckverbinders 1 in einen Gegenstecker 70 mittels des Entriegelungsmechanismus zu gewährleisten, sind erfindungsgemäß zwei Federn 54, 54' vorgesehen. Diese greifen in die Federaufnahmen 24, 24' des Gleitelements 20 und die Federaufnahmen 12, 12' des Trägerelements 10 ein und üben eine Kraft auf das Gleitelement 20 in Steckrichtung aus.

Fig. 6 zeigt zudem die in dieser Ausführungsform vorgesehene Zugentlastung 51. In dieser wird das angeschlossene Kabel 50 verklemmt, wodurch eine Zugkraft auf die Kabelvereinzelung 15 sowie die Kabelanschlusskontakte 62 vermieden wird. Die Zugentlastung 51 wird mittels der Schrauben 53, 53' in der Zugentlastungsaufnahme 13 mit dem Trägerelement 10 verschraubt.

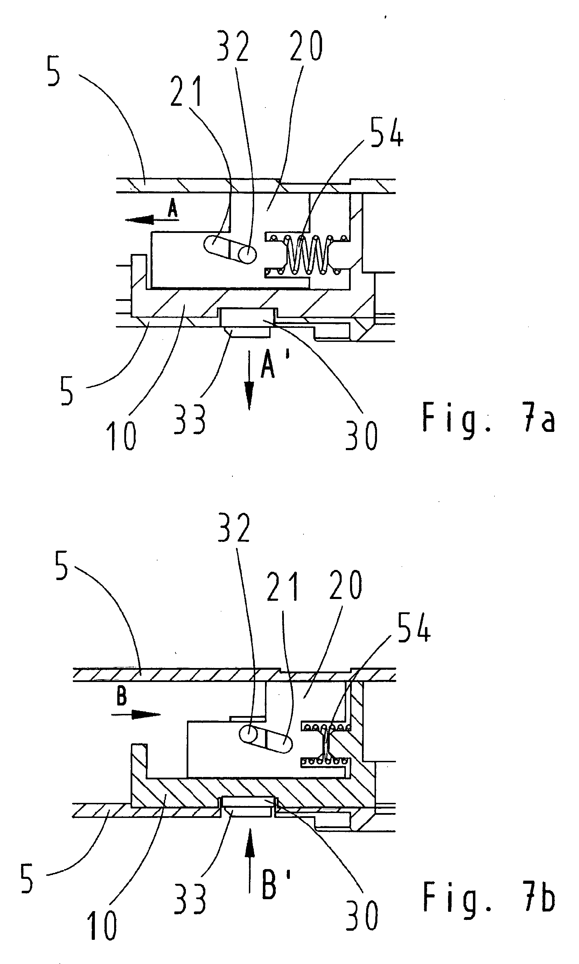

Die Fig. 7a und 7b stellen Detailansichten des Steckverbinders 1 in einer Schnittdarstellung dar, die den Entriegelungsmechanismus zeigen.

In der Fig. 7a ist das Gehäuses 5 und das darin befindliche Trägerelement 10 dargestellt. Auf dem Trägerelement 10 sich das Gleitelement 20 und das Entriegelungselement 30 des Entriegelungsmechanismus angeordnet, sowie eine dargestellte Feder 54. Die Feder 54 drückt in der gezeigten Stellung das Gleitelement 20 in eine vordere Verriegelungsstellung A. Dementsprechend befinden sich die Führungsnasen 32 des Entriegelungselements 30 in einer unteren Endposition in den Führungsnuten 21 des Gleitelements 20. Dadurch ist das Entriegelungselement 30 in einer Verriegelungsstellung A', so dass das Rastmittel 33, welches sich außerhalb des Gehäuses 5 an dem Entriegelungselement 30 befindet, mit dem Federelement 71 des Gegensteckers 70 verrasten kann.

Fig. 7b stellt entsprechend Fig. 7a den Entriegelungsmechanismus des Steckverbinders 1 im entriegelten Zustand dar. Durch Ziehen der Lasche 40 wird das Gleitelement 20 in eine hintere Entriegelungsstellung B entgegen der Kraftwirkung der Federn 54 verlagert. Die Führungsnasen 32 des Entriegelungselements 30 befinden sich in einer oberen Endposition in der Führungsnuten 21 des Gleitelements 20. Das Entriegelungselement 30 ist dadurch so in eine Entriegelungsstellung B' verschoben, dass das Rastmittel 33 in das Gehäuse 5 verlagert ist und eine Verrastung mit dem Federelement 71 eines Gegensteckers 70 gelöst ist. Durch Freigabe der Lasche 40 zwingen die Federn 54 den Entriegelungsmechanismus wieder in die Verriegelungsstellung A, A' entsprechend Fig. 7a.

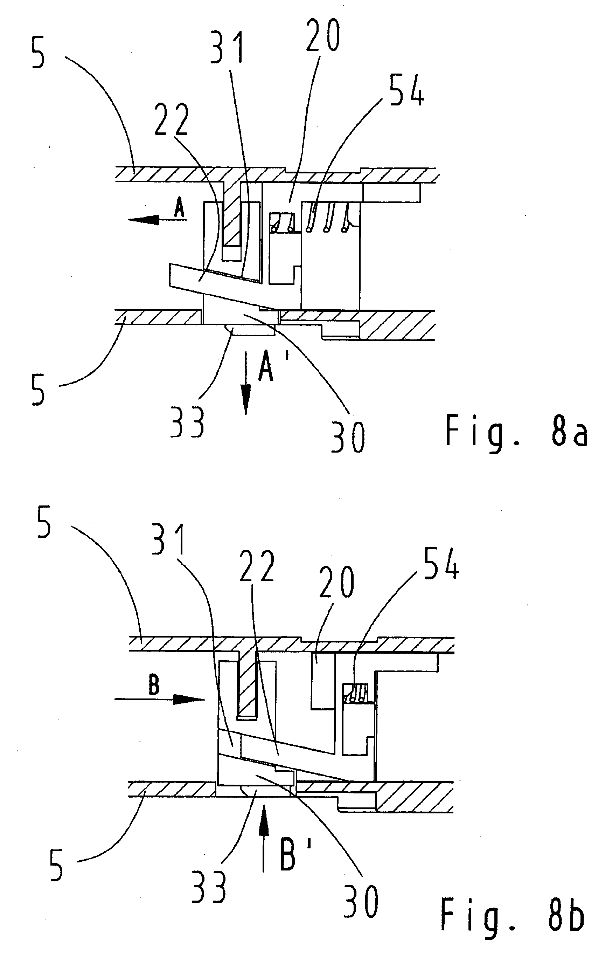

Die Fig. 8a und 8b stellen eine zweite Ausführungsform des in den Fig. 7a und 7b gezeigten Entriegelungsmechanismus in Verriegelungsstellung A, A' bzw. Entriegelungsstellung B, B' dar. Die Funktionsweise des Entriegelungsmechanismus ist identisch mit der Funktionsweise in Fig. 7a und 7b. In dieser Ausführungsform verfügt jedoch das Gleitelement 20 über Führungsnasen 22, 22', welche in Führungsnuten 31, 31' des Entriegelungselements 30 eingreifen. Entsprechend dem Ausführungsbeispiel der Fig. 7a und 7b gibt es sowohl eine Verriegelungsstellungen A, A', als auch Entriegelungsstellungen B, B' des Gleitelements 22 und des Entriegelungselements 26.

### Bezugszeichenliste

### Steckverbinder

- 1: Steckverbinder
- 2: Steckseite
- 3: Kabelanschlussseite
- 5: Gehäuse
- 6: Entriegelungselementöffnung
- 7: Nut
- 10: Trägerelement
- 11, 11': Zapfen
- 12, 12': Federaufnahme
- 13: Zugentlastungsaufnahme
- 14: Knickschutzaufnahme
- 15: Kabelvereinzelung
- 16, 16': Ausnehmungen
- 17: Klemmbügel
- 20: Gleitelement
- 21, 21': Führungsnuten
- 22, 22': Führungsnasen
- 23, 23': Ausnehmungen, T-förmig
- 24, 24': Federaufnahmen
- 25, 25': Schenkel
- 30: Entriegelungselement
- 31, 31': Führungsnuten
- 32, 32': Führungsnasen
- 33: Rastmittel
- 40: Lasche
- 41: Griffende
- 42, 42': Befestigungsenden, T-förmig
- 45: Masseband
- 46: Kontaktfinger
- 50: Kabel
- 51: Zugentlastung
- 52: Knickschutz
- 53, 53': Schraube
- 54, 54': Feder
- 55: Ader
- 60: Leiterplatte
- 61: Steckerkontakte
- 62: Kabefanschlusskontakte
- 63, 63': Bohrung
- 70: Gegenstecker
- 71: Federelement

## Patentansprüche

1. Steckverbinder zum Anschluss elektrischer Leiter, gebildet aus einem Gehäuse (5), mit einer mittels einer Leiterplatte (60) gebildeten Steckseite (2) und einer Kabelanschlussseite (3), versehen mit einem Rastmittel (33), zur Verrastung mit einem Gegenstecker (70), und einem Entriegelungsmechanismus, der mittels einer Lasche (40) auslösbar ist, wobei der Entriegelungsmechanismus ein entlang der Steckverbinderlängsachse verschiebbares Gleitelement (20) aufweist, **dadurch gekennzeichnet,**
**dass** das Gehäuse (5) einstückig ausgebildet ist und im Inneren den Entriegelungsmechanismus enthält,
**dass** der Entriegelungsmechanismus vom Inneren des Gehäuses (5) aus auf das außenliegende Rastmittel (33) wirkt, und dass der Entriegelungsmechanismus ein Entriegelungselement (30) aufweist, das senkrecht zur Steckverbinderlängsachse verschiebbar ist,
**dass** das Gleitelement (20) und das Entriegelungselement (30) beweglich miteinander verbunden sind und so zusammenwirken, dass die Bewegung des Gleitelements (20) entlang der Steckverbinderlängsachse eine Bewegung des Entriegelungselements (30) senkrecht zur Steckverbinderlängsachse bewirkt, und
**dass** durch Ziehen der an der Kabelanschlussseite (3) befindlichen Lasche (40) entgegen der Steckrichtung des Steckverbinders (1) der Entriegelungsmechanismus das Rastmittel (33) in das Gehäuse (5) zieht und dadurch die Verrastung zum Gegenstecker (70) löst.

2. Steckverbinder zum Anschluss elektrischer Leiter nach Anspruch 1, **dadurch gekennzeichnet,**
**dass** das Gleitelement (20) des Entriegelungsmechanismus zur Steckverbinderlängsachse schräg angeordnete Führungsnuten (21, 21') aufweist, in welche Führungsnasen (32, 32') Entriegelungselements (30) eingreifen.

3. Steckverbinder zum Anschluss elektrischer Leiter nach Anspruch 1, **dadurch gekennzeichnet,**
**dass** das Entriegelungselement (30) des Entriegelungsmechanismus zur Steckverbinderlängsachse schräg angeordnete Führungsnuten (31, 31') aufweist, in welche Führungsnasen (22, 22') des Gleitelements (20) eingreifen.

4. Steckverbinder zum Anschluss elektrischer Leiter nach einem der Ansprüche 1 bis 3, **dadurch gekennzeichnet,**
**dass** an dem Entriegelungselement (30) des Entriegelungsmechanismus das Rastmittel (33) zur Verrastung des Steckverbinders (1) mit dem Gegenstecker (70) angebracht ist.

5. Steckverbinder zum Anschluss elektrischer Leiter nach einem der Ansprüche 1 bis 4, **dadurch gekennzeichnet,**
**dass** die Lasche (40) zur Betätigung des Entriegelungsmechanismus an der in Richtung der Kabelanschlussseite (3) weisenden Seite des Gleitelements befestigt ist, und sowohl oberhalb, als auch um 180° entlang seiner Längsachse gedreht unterhalb eines anzuschließenden elektrischen Kabels (50) angebracht werden kann.

6. Steckverbinder zum Anschluss elektrischer Leiter nach einem der Ansprüche 1 bis 5, **dadurch gekennzeichnet,**
**dass** eine Feder (54) auf den Entriegelungsmechanismus wirkt und dadurch eine Zwangsverriegelung des Entriegelungsmechanismus bewirkt.

7. Steckverbinder zum Anschluss elektrischer Leiter nach einem der Ansprüche 1 bis 6, **dadurch gekennzeichnet,**
**dass** im Gehäuse (5) des Steckverbinders (1) ein Kabelvereinzelung (15) für eine geordnete Fixierung und direkte Kontaktierung von vereinzelten Adern (55) eines angeschlossenen elektrischen Kabels (50) auf der Leiterplatte (60) vorgesehen ist.

8. Steckverbinder zum Anschluss elektrischer Leiter nach einem der Ansprüche 1 bis 7, **dadurch gekennzeichnet,**
**dass** an dem Gehäuse (5) des Steckverbinders (1) ein elektrisch leitendes Band (45) zur Massekontaktierung des Steckverbinders (1) mit dem Gegenstecker (70) vorgesehen ist.

## Claims

1. A plug connector for connecting electrical conductors, formed of a housing (5), comprising a plug-in side (2) formed by means of a printed circuit board (60) and a cable connection side (3), provided with a latching means (33) for latching with a mating plug (70), and an unlocking mechanism which can be triggered by means of a tongue (40), the unlocking mechanism including a sliding member (20) which is displaceable along the longitudinal axis of the plug connector, **characterized in that**
the housing (5) is configured in one piece and contains the unlocking mechanism in its interior,
**in that** the unlocking mechanism acts on the exterior latching means (33) from the inside of the housing (5), and **in that** the unlocking mechanism includes an unlocking member (30) which is displaceable perpendicularly to the longitudinal axis of the plug connector,
**in that** the sliding member (20) and the unlocking member (30) are movably connected with each other and cooperate in such a way that the movement of the sliding element (20) along the longitudinal axis of the plug connector effects a movement of the unlocking member (30) perpendicularly to the longitudinal axis of the plug connector, and
**in that** by pulling on the tongue (40) located on the cable connection side (3) contrary to the plug-in direction of the plug connector (1), the unlocking mechanism pulls the latching means (33) into the housing (5) and thereby releases the latching engagement with the mating plug (70).

2. The plug connector for connecting electrical conductors according to claim 1, **characterized in that**
the sliding member (20) of the unlocking mechanism includes guide grooves (21, 21') which are arranged obliquely to the longitudinal axis of the plug connector and into which guide noses (32, 32') of the unlocking member (30) engage.

3. The plug connector for connecting electrical conductors according to claim 1, **characterized in that**
the unlocking member (30) of the unlocking mechanism includes guide grooves (31, 31') which are arranged obliquely to the longitudinal axis of the plug connector and into which guide noses (22, 22') of the sliding member (20) engage.

4. The plug connector for connecting electrical conductors according to any of claims 1 to 3, **characterized in that**
the latching means (33) for latching the plug connector (1) with the mating plug (70) is mounted to the unlocking member (30) of the unlocking mechanism.

5. The plug connector for connecting electrical conductors according to any of claims 1 to 4, **characterized in that**
the tongue (40) for actuating the unlocking mechanism is fastened on the side of the sliding member pointing towards the cable connection side (3) and can be mounted both above and, when rotated through 180 degrees along its longitudinal axis, also below an electrical cable (50) to be connected.

6. The plug connector for connecting electrical conductors according to any of claims 1 to 5, **characterized in that**
a spring (54) acts on the unlocking mechanism and thereby effects a forced locking of the unlocking mechanism.

7. The plug connector for connecting electrical conductors according to any of claims 1 to 6, **characterized in that**
a cable separation means (15) for an orderly fixation and direct contacting of individualized cores (55) of a connected electrical cable (50) on the printed circuit board (60) is provided in the housing (5) of the plug connector (1).

8. The plug connector for connecting electrical conductors according to any of claims 1 to 7, **characterized in that**
provided on the housing (5) of the plug connector (1) is an electrically conducting strip (45) for providing a ground contact of the plug connector (1) with the mating plug (70).

## Revendications

1. Connecteur enfichable pour le raccordement de conducteurs électriques, composé d'un boîtier (5), présentant un côté d'enfichage (2) formé au moyen d'une carte de circuit imprimé (60) et un côté de raccordement de câble (3), pourvu d'un moyen d'enclenchement (33) pour l'enclenchement avec un connecteur antagoniste (70), et un mécanisme de déverrouillage qui est apte à être déclenché au moyen d'une languette (40), le mécanisme de déverrouillage comportant un élément coulissant (20) déplaçable le long de l'axe longitudinal du connecteur enfichable, **caractérisé en ce que**
le boîtier (5) est réalisé d'un seul tenant et contient à l'intérieur le mécanisme de déverrouillage,
**en ce que** le mécanisme de déverrouillage agit depuis l'intérieur du boîtier (5) sur le moyen d'enclenchement (33) agencé à l'extérieur, et **en ce que** le mécanisme de déverrouillage présente un élément de déverrouillage (30) qui est apte à être déplacé perpendiculairement à l'axe longitudinal du connecteur enfichable,
**en ce que** l'élément coulissant (20) et l'élément de déverrouillage (30) sont reliés l'un à l'autre de manière mobile et coopèrent de telle sorte que le mouvement de l'élément coulissant (20) le long de l'axe longitudinal du connecteur enfichable provoque un mouvement de l'élément de déverrouillage (30) perpendiculairement à l'axe longitudinal du connecteur enfichable, et
**en ce qu'**en tirant sur la languette (40) qui se trouve du côté de raccordement de câble (3) à l'encontre du sens d'enfichage du connecteur enfichable (1), le mécanisme de déverrouillage tire le moyen d'enclenchement (33) dans le boîtier (5) et débloque ainsi l'enclenchement avec le connecteur antagoniste (70).

2. Connecteur enfichable pour le raccordement de conducteurs électriques selon la revendication 1, **caractérisé en ce que**
l'élément coulissant (20) du mécanisme de déverrouillage présente des gorges de guidage (21, 21') qui sont agencées de manière inclinée par rapport à l'axe longitudinal du connecteur enfichable et dans lesquelles des ergots de guidage (32, 32') de l'élément de déverrouillage (30) s'engagent.

3. Connecteur enfichable pour le raccordement de conducteurs électriques selon la revendication 1, **caractérisé en ce que**
l'élément de déverrouillage (30) du mécanisme de déverrouillage présente des gorges de guidage (31, 31') qui sont agencées de manière inclinée par rapport à l'axe longitudinal du connecteur enfichable et dans lesquelles des ergots de guidage (22, 22') de l'élément coulissant (20) s'engagent.

4. Connecteur enfichable pour le raccordement de conducteurs électriques selon l'une des revendications 1 à 3, **caractérisé en ce que**
le moyen d'enclenchement (33) pour l'enclenchement du connecteur enfichable (1) avec le connecteur antagoniste (70) est agencé sur l'élément de déverrouillage (30) du mécanisme de déverrouillage.

5. Connecteur enfichable pour le raccordement de conducteurs électriques selon l'une des revendications 1 à 4, **caractérisé en ce que**
la languette (40) pour l'actionnement du mécanisme de déverrouillage est fixée du côté de l'élément coulissant tourné vers le côté de raccordement de câble (3) et peut être montée tant au-dessus que tournée de 180° le long de son axe longitudinal au-dessous d'un câble électrique (50) à raccorder.

6. Connecteur enfichable pour le raccordement de conducteurs électriques selon l'une des revendications 1 à 5, **caractérisé en ce que**
un ressort (54) agit sur le mécanisme de déverrouillage et produit ainsi un verrouillage forcé du mécanisme de déverrouillage.

7. Connecteur enfichable pour le raccordement de conducteurs électriques selon l'une des revendications 1 à 6, **caractérisé en ce que**
il est prévu dans le boîtier (5) du connecteur enfichable (1) une séparation de câbles (15) pour une fixation ordonnée et une mise en contact directe de brins isolés (55) d'un câble électrique (50) raccordé sur la carte de circuit imprimé (60).

8. Connecteur enfichable pour le raccordement de conducteurs électriques selon l'une des revendications 1 à 7, **caractérisé en ce que**
il est prévu sur le boîtier (5) du connecteur enfichable (1) un ruban électriquement conducteur (45) pour le contact à la masse du connecteur enfichable (1) avec le connecteur antagoniste (70).
